Europäisches Patentamt

European Patent Office

Office européen des brevets

(19)

(11) Veröffentlichungsnummer : **0 077 356
B1**

## EUROPÄISCHE PATENTSCHRIFT

(45) Veröffentlichungstag der Patentschrift :
03.12.86

(21) Anmeldenummer : 82901288.9

(22) Anmeldetag : 28.04.82

(86) Internationale Anmeldenummer :
PCT/AT 82/00014

(87) Internationale Veröffentlichungsnummer :
WO/8203760 (11.11.82 Gazette 82/27)

(51) Int. Cl.⁴ : **A 61 C   1/14**

(54) FEILWERKZEUG MIT OSZILLIERENDEM WERKZEUGHALTER.

(30) Priorität : 30.04.81 AT 1943/81

(43) Veröffentlichungstag der Anmeldung :
27.04.83 Patentblatt 83/17

(45) Bekanntmachung des Hinweises auf die Patenterteilung : 03.12.86 Patentblatt 86/49

(84) Benannte Vertragsstaaten :
CH DE FR LI

(56) Entgegenhaltungen :
CH-A-   354 893
DE-A- 2 905 484
FR-A- 2 361 090
US-A- 3 074 167

(73) Patentinhaber : DENTALWERK BÜRMOOS GESELLS-
CHAFT M.B.H.
Ignaz Glaser-Strasse 53
A-5111 Bürmoos (AT)

(72) Erfinder : MALATA, Peter
Ignaz Glaser Strasse 55
A-5111 Bürmoos (AT)
Erfinder : BUCHSTEINER, Josef
Feldbahnweg 2
A-5111 Bürmoos (AT)
Erfinder : ROSENSTATTER, Otto
Matzing 105
A-5164 Seeham (AT)

(74) Vertreter : Krick, Hermann et al
Patentanwälte Dipl.-Ing. Erich Barger, Dipl.-Ing. Hermann Krick Biberstrasse 15
A-1010 Wien (AT)

## Beschreibung

Die Erfindung bezieht sich auf ein Feilwerkzeug mit in einem Winkelkopf axial unverschiebbar gelagertem, drehbeweglich oszillierendem Werkzeughalter und einer in diesem verschiebbar gelagerten, durch eine Druckfeder in Schließstellung gehaltenen und mittels eines Druckknopfes durch Verschieben zu lösender Kegelspannzange für die drehfeste Aufnahme der Handhaben zahnärztlicher Wurzelkanalfeilen und mit Antrieb des Werkzeughalters mittels Exzenterzapfens einer Kurbelwelle.

Bei einem bekannten Werkzeug dieser Art nach CH-A-581 463 ist ein Werkzeughalter beschrieben, der in einem zahnärztlichen Winkelkopf drehbeweglich und längsbeweglich gelagert und dessen Aufnahme für die Einspannung von Wurzelkanalfeilen mit Handgriffen ausgebildet ist, wobei die Handgriffe von einer Spannhülse umfaßt werden, deren federnde Längszungen durch eine Drehbewegung einer ringförmigen Handhabe den Handgriff der Feile festklemmen. Die Übersetzung der Drehbewegung des Betätigungsringes auf die Federzungen der Spannhülse erfolgt dabei durch Klemmelemente, die an Keilflächen des Ringes anliegen und gleichzeitig auf die Federzungen radialbeweglich einwirken. Um Werkzeuge einspannen oder lösen zu können, muß daher stets das Behandlungsinstrument in der Arbeitshand festgehalten und mit der anderen Hand der Betätigungsring gedreht und auch festgezogen werden, was eine zeitraubende und auch mühsame Manipulation darstellt. Mühsam vor allem deswegen, weil die Betätigungsringe, wie alle Bauteile zahnärztlicher Behandlungsköpfe, bekanntlich klein dimensioniert sein müssen, überdies von Speichel benetzt werden und daher in ihrer Griffigkeit erheblich eingeschränkt sind. Der Zeitaufwand für den Werkzeugwechsel fällt bei der Wurzelkanalbehandlung deswegen ins Gewicht, weil bei jedem Präparationsvorgang in jeweils kurzen Arbeitsabschnitten der Wurzelkanal mit Feilen verschiedener Stärke allmählich erweitert werden muß und somit häufig die Werkzeuge zu wechseln sind. Der beschriebene Mechanismus für die Halterung der Werkzeuge ist somit im Hinblick auf eine erwünschte rasche Arbeitsfolge innerhalb eines jeden Präparationsganges nachteilig durch zu umständliche Handhabung. Ein weiterer Nachteil des bekannten Feilwinkelstückes ist darin zu sehen, daß der Antrieb des Werkzeughalters durch eine Kurbelachse erfolgt, deren Exzenterzapfen in eine Radialbohrung des Werkzeughalters eingreift und diesem eine oszillierende, gleichzeitige Hub- und Drehbewegung aufzwingt, während in der Praxis heute der Wunsch vorherrscht, das Werkzeug eine ausschließlich drehende Schwenkbewegung von mindest 60° Drehwinkel ausführen zu lassen und die Feilbewegung in Längsrichtung der Werkzeuge durch die Führung der Arbeitshand auszuüben und einfühlig kontrollieren zu können. Es ist zwar bekannt (DE-A-1 552 379 und US-A-

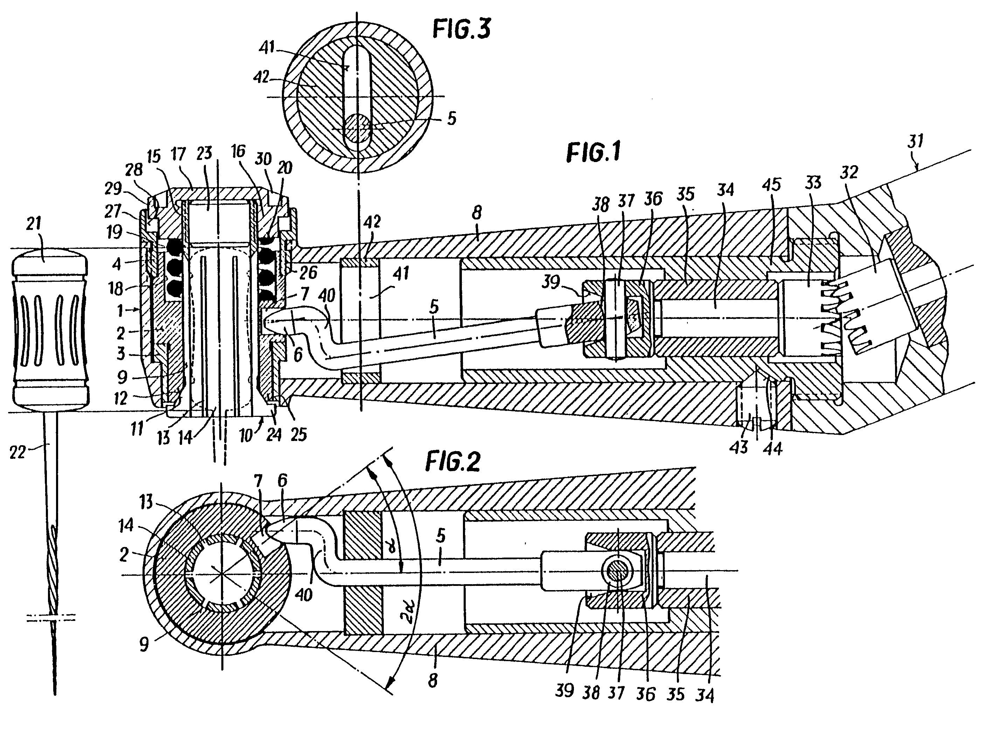

2 135 933) den Werkzeughalter axial abgestützt für reine Drehbewegung zu lagern und an seinem Außenmantel mit einer Längsnut auszustatten, um ihn durch Eingriff eines quer dazu rotierenden Exzenterzapfens in drehende Pendelbewegung zu versetzen, doch muß sich bei solcher Bauart die Längsnut über den größten Teil der Länge des Werkzeughalters erstrecken und etwa die gleiche Tiefe aufweisen, wie die Radialbohrung für den Eingriff des Exzenterzapfens nach CH-A-581 463, sodaß nur bei Verwendung dünner Werkzeugschäfte am Werkzeughalter die erforderliche Wandstärke verbleibt. Nimmt hingegen die Spannvorrichtung einschließlich Spannzange relativ großen Raum innerhalb des Werkzeughalters ein, wie etwa in Fig. 3 der CH-A-581 463 ersichtlich, so ist eine äußere Längsnut nicht anzubringen und dem Antrieb des Werkzeughalters durch Eingriff eines Zapfens 4 in eine Bohrung 5 der Vorzug zu geben.

Aus der DE-A-2 905 484, die ein zahnärztliches Bohrwerkzeug offenbart, ist es bekannt, eine mittels Druckknopf betätigbare Spannzange vorzusehen, wobei der Druckknopf von einer axial beweglichen Abschlußkappe des Kopfgehäuses umgeben ist, die federbelastet in Betriebsstellung über das zugeordnete Ende des Winkelkopfgehäuses vorsteht und dieses gegebenenfalls umgreift. Dieses Werkzeug ist für hohe und höchste Drehzahlen ausgelegt, wodurch es erforderlich ist, alle rotierenden Teile hervorragend zu zentrieren und mit Ausnahme des aus dem Winkelkopf ragenden Werkzeugteiles alle rotierenden Teile gegen die Umgebung auszuschirmen. Wie bei einem Bohrwerkzeug üblich, führt dieses und damit der Winkelkopf in axialer Richtung eine stetige und keine hin- und hergehende Bewegung aus.

Aus der US-A-3 074 167 sowie aus der CH-A-354 893, die beide zahnärztliche Bohrgeräte betreffen, ist es bekannt, Kegelspannzangen zu verwenden, die etwa die gleiche Länge wie der Bohrkopf aufweisen, wodurch die Handhabung der Kegelspannzange vereinfacht wird. Dabei ist entweder das rotierende Ende der Spannzange versenkt, was die Benutzung eines speziellen Öffnungswerkzeuges erfordert, oder durch eine feststehende Kappe abgeschirmt, wodurch das Bauvolumen erheblich vergrößert wird.

Die vorliegende Erfindung hat es sich zur Aufgabe gestellt, die Nachteile der bekannten Feilwerkzeuge bezüglich des Werkzeugwechsels und des Antriebes zu vermeiden und den Werkzeughalter so auszugestalten, daß der Werkzeugwechsel durch Öffnen der Spannzange mittels Fingerdruck erfolgen kann und daß weiters der Antrieb des Werkzeughalters drehbeweglich oszillierend erfolgt, ohne auf dem Werkzeughalter eine äußere Längsnut für den Eingriff der Kurbelwelle vorsehen zu müssen.

Erfindungsgemäß wird dies dadurch erreicht, daß der Druckknopf als Verschlußkappe des Winkelkopfes ausgebildet ist, die in Betriebsstellung bei eingespanntem Werkzeug über das zugeordnete Ende des Winkelkopfgehäuses vorsteht und dieses gegebenenfalls umgreift und daß weiters die Spannzange länger als der Werkzeughalter ist, daß der Werkzeughalter an seinem Außenmantel in der Ebene des Kopfschaftes eine radiale, gegen die Längsbohrung des Werkzeughalters geschlossene Bohrung aufweist, in welche der exzentrische Triebzapfen der Kurbelwelle drehbar gelagert eingreift, und daß die Kurbelwelle geführt ist.

So wird erreicht, daß der Antrieb des Werkzeughalters ohne eine Längsnut auf dessen Außenmantel mittels Exzentertriebes erfolgen kann und durch den wesentlich geringeren Raumbedarf einer einfachen Radialbohrung die Lagerung und das beschriebene Spannsystem — insbesondere die vorgeschlagene Druckfeder — des Werkzeughalters in jener gedrängten Bauweise angeordnet werden können, die zur Erzielung kleiner Dimensionen des Feilwerkzeuges aus anwendungstechnischen Gründen verlangt werden muß. Vorzugsweise greift in die Radialbohrung des Werkzeughalters ein Exzenterzapfen einer Kurbelwelle ein, die an ihrem Antriebsende gelenkig in der Triebachse gelagert und nahe am Exzenterzapfen in einem zum Werkzeughalter achsparallelen Schlitz geführt ist. Die Radialbohrung des Werkzeughalters liegt in gleicher Ebene mit der Antriebsachse des Kopfschaftes und kann nur innerhalb dieser Ebene drehbeweglich verschwenkt, nicht aber aus dieser Ebene verschoben werden, weshalb die Kurbelwelle zu einer Ausweichbewegung innerhalb ihrer Schlitzführung veranlaßt wird und in dieser Führung je Umdrehung einmal hin und her pendelt.

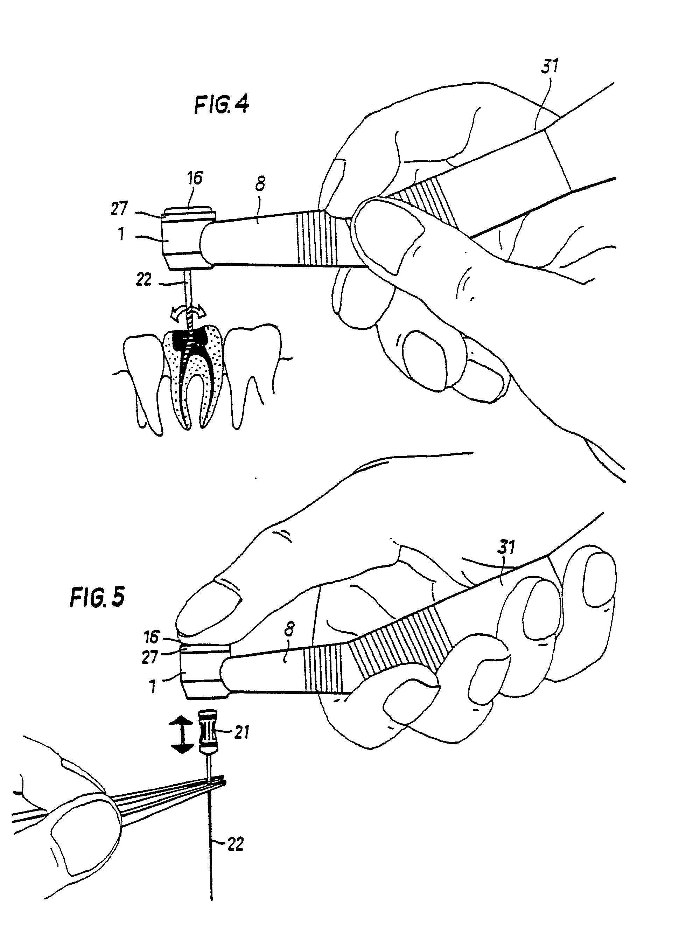

Die Erfindung ist in der nachfolgenden Beschreibung an Hand der Zeichnungen näher erläutert, die Zeichnungen stellen dar : Fig. 1 einen Längsschnitt durch einen zahnärztlichen Feilwinkelkopf samt Kopfschaft und gewinkeltem Übergang zur Griffpartie, Fig. 2 einen Querschnitt durch Kopf und Kopfschaft nach I-I der Fig. 1, Fig. 3 einen Querschnitt durch den Kopfschaft nach II-II der Fig. 1, Fig. 4 ein Winkelhandstück mit eingespannter Wurzelkanalfeile in Gebrauchshaltung für die Anwendung, Fig. 5 ein Winkelhandstück in Gebrauchshaltung für den Werkzeugwechsel.

Im Kopf 1 eines zahnärztlichen Winkelhandstückes ist ein Werkzeughalter 2 drehbeweglich gelagert und axial abgestützt in Gleitlagern 3 und 4. Er wird von einer Welle 5 in teilweise Drehbewegung versetzt durch den Eingriff eines exzentrischen Wellenzapfens 6 in eine Ausnehmung 7, die am Umfang des Werkzeughalters in gleicher Ebene mit der Achse des Kopfschaftes 8 angeordnet ist. Der Werkzeughalter 2 ist von einer Bohrung 9 durchsetzt, in der eine Spannzange 10 längsbeweglich geführt ist, deren Außenkegel 11 gegen einen analogen Innenkegel 12 des Werkzeughalters anliegt. Die Spannzange ist in bekannter Weise durch Längsschlitze 13 in mehrere Federzungen 14 unterteilt, die sich konzentrisch schließen, wenn die Spannzange gegen den Innenkegel 12 des Werkzeughalters gezogen wird. Die Spannzange 10 ist an ihrem hinteren Ende mittels eines Gewindes 15 in eine Abschlußkappe 16 eingeschraubt, die axial über das Ende des Winkelkopfes vorsteht und durch ihren Boden 17 das Spannzangenende überdeckt. In einer Stufensenkung 18 des Werkzeughalters liegt eine Druckfeder 19, die gegen die Stirnfläche 20 der Kappe 16 drückt und so vorgespannt ist, daß die Spannzange 10 ständig in Schließstellung gezogen wird. Durch axialen Druck auf die Kappe 16 in Richtung des Werkzeuges kann dann die Spannzange 10 gegen den Druck der Feder 19 in Öffnungsstellung geschoben werden, um die Handhabe 21 der Wurzelkanalfeile 22 aufnehmen zu können. Im hinteren Ende der Spannzange 10 ist ein Distanzstück 23 befestigt, welches in seiner Länge so abgestimmt ist, daß es einen Anschlag für die vorgegebene Länge der Handhabe 21 bildet, die in Fig. 1 als strichlierte Kontur in Einspannstellung angedeutet ist. Die Spannzange 10 besitzt an ihrer Werkzeugmündung einen Außenbund 24, der den Spannkegel überragt und gegen die Stirnfläche 25 des Werkzeughalters zur Anlage kommt, wenn die Spannzange ohne ein eingesetztes Werkzeug schließt. Diese Einschränkung der Längsbeweglichkeit der Spannzange ist sowohl für die Begrenzung der Betätigungswege als auch für den Schutz der Federzungen 14 vor Überlastung durch extreme Schließbewegung der fallweise leeren Zange von Vorteil.

Das hintere Lager 4 des Kopfes ist als schraubbare Hülse ausgebildet und mit einem Gewindeansatz 26 versehen und in den Kopf eingeschraubt, wobei der Zylinderfortsatz 27 gegen die Stirnfläche des Kopfes anliegt und dessen Verschluß bildet. Eine Ausdrehung 28 des Zylinders 27 übergreift den äußeren Bund 29 der Kappe 16 und ist in ihren Abmessungen so gehalten, daß die Kappe 16 den zum Betätigen der Spannzange erforderlichen Spielraum hat. Da die Kappe 16 mittels Fingerdruck zu betätigen sein soll, ist es zweckmäßig, wenn ihr Bund 29 in Einspannstellung etwas über den Zylinder 27 vorsteht, wie in Fig. 1 gezeichnet. An der äußeren Stirnfläche der Kappe 16 sind zwei Bohrungen 30 angeordnet, die für den Eingriff eines Stiftschlüssels vorgesehen sind, um die Kappe arretieren und die Spannzange bedarfsweise auswechseln zu können, indem diese mit einem geeigneten Werkzeug ausgeschraubt wird. Die somit gegebene Austauschbarkeit der Spannzange ist sehr vorteilhaft, weil das Feilwerkzeug verschiedenen Durchmesserbereichen von Werkzeugschäften angepaßt werden kann und der Einsatz unterschiedlicher Spannzangen ohne weitere Demontage des Winkelkopfes möglich ist. Der Antrieb der Kurbelwelle 5 erfolgt aus dem Handgriff 31 des Winkelhandstückes in bekannter Weise durch Winkeltriebe 32, 33 und eine Zwischenwelle 34, die in einem Lager 35 geführt ist und an ihrem Abtriebsende einen zentrisch angebohrten Kopf 36 trägt, der mittels Querstift 37 mit dem Ende der Kurbelwelle verbunden ist. Der Querstift 37 durchsetzt eine beiderseits konische Radialbohrung 38 der Kurbelwelle 5, wodurch diese Welle mitgenommen wird und gleichzeitig allseitig gelenkig pendeln kann. Die Gelenkigkeit der Welle 5 wird weiters noch dadurch ermöglicht, daß sie an ihrem Ende ballig verjüngt ist und daß die Mündung des Kopfes 36 bis nahe an den Gelenkstift durch einen Innenkonus 39 erweitert ist. Die Kurbelwelle ist nahe an der Exzenterkröpfung 40 in einem Schlitz 41 drehbeweglich geführt, der als Durchbruch in einer Scheibe 42 angeordnet ist, die im Kopfschaft 8 befestigt und so gerichtet ist, daß der Schlitz in gleicher Ebene mit der Achse des Werkzeughalters 2 liegt.

Die Verbindung zwischen Kopfschaft 8 und Griffteil 31 wird durch eine Stellschraube 43 bewirkt, die durch die Wandung des Kopfschaftes gegen eine Ausnehmung 44 eines Hülsenteiles geschraubt wird, welcher seinerseits mit dem Griffteil verschraubt ist. Nach Lösen der Schraube 43 kann der Winkelkopf samt Schaft 8 vom Griffteil abgenommen werden.

Wird die Welle 5 rotierend angetrieben, so muß sie zwangsläufig um ihre Hauptachse rotieren und der Exzenterzapfen 6 wird eine Kreisbahn beschreiben, deren Radius gleich seiner Exzentrizität ist. Diese Kreisbewegung kann aber nicht voll auf den Werkzeughalter 2 übertragen werden, da dieser nur drehbeweglich, nicht aber längsbeweglich gelagert ist. Somit kann der in die Ausnehmung 7 des Werkzeughalters eingreifende Exzenterzapfen 6 dem Werkzeughalter lediglich eine Schwenkbewegung in der Ebene der Fig. 2 im Betrag von 2 α vermitteln und werden die quer zu dieser Ebene wirksamen Bewegungskomponenten durch ein Auspendeln der Welle 5 innerhalb des Schlitzes 41 der Scheibe 42 aufgenommen. Die Welle 5 bzw. deren Exzenterteil führen eine Taumelbewegung aus, deren Umkehrstellungen in je einer Bewegungsebene in den Fig. 1 und 2 dargestellt sind. Dieser Antrieb bietet den Vorteil, daß die erforderliche Radialbohrung 7 innerhalb des Werkzeughalters nur sehr wenig Platz beansprucht und der rückwärtige Teil des Werkzeughalters für die Unterbringung der Druckfeder 19 genutzt werden kann und daß weiters die Lager des Werkzeughalters nahe an die Achse des Kopfschaftes herangezogen werden können, um eine möglichst niedrige Bauart des Winkelkopfes zu erzielen.

Fig. 4 zeigt, wie ein Feilwerkzeug der erfindungsgemäßen Ausführung gehandhabt wird, wenn mittels eingespannter Wurzelkanalfeile 22 der Nervkanal eines Zahnes ausgefeilt wird, wobei die elastisch biegsame Feile dem meist gekrümmten Wurzelkanal folgt und durch ihre oszillierende Drehbewegung im Sinne der eingezeichneten Pfeile mit ihren Schneidflächen oder -zähnen den Kanal allmählich erweitert. Der Vorschub in die Tiefe wird dabei von Hand ausgeführt und es bedarf großen Geschickes des Operateurs, Feilenbruch zu vermeiden und das Durchstoßen der Zahnwurzel oder deren Spitze auszuschließen. Es wurde schon gesagt, daß für die Bearbeitung ein und desselben Wurzelkanals eine Anzahl verschiedener Feilen verwendet werden muß und daß somit der Zeitaufwand für den Wechsel dieser Feilen ein bedeutender Anteil der gesamten Behandlungsdauer ist, wenn nach dem bisherigen Stand der Technik das Feilwinkelstück in der einen Hand gehalten und mit der anderen Hand der Spannmechanismus betätigt werden muß. Demgegenüber bringt die erfindungsgemäße Ausgestaltung des Spannsystems insoferne eine wesentliche Verbesserung, als der Werkzeugwechsel durch Druck des Daumens der Arbeitshand auf die Kappe 16 des Winkelkopfes ermöglicht wird und die zweite Hand für das Erfassen der Werkzeuge frei ist, wie in Fig. 2 dargestellt. Daß diese Art des Werkzeugwechsels auch wesentlich schneller und müheloser zu handhaben ist, liegt auf der Hand, und es ist als weiterer Vorzug des erfindungsgemäßen Spannmechanismus zu betrachten, daß dessen Betätigung ohne Beeinträchtigung auch bei durch Speichel benetztem Winkelkopf möglich ist.

Die Erfindung ist nicht auf die beschriebene und dargestellte Ausführungsform beschränkt und läßt zahlreiche Ausgestaltungen und Verbesserungen zu. So kann zum Beispiel die Druckkappe mit ihrem größten Durchmesser den Kopf des Feilwerkzeuges außen übergreifen, um sie vergrößern zu können und die Auflage des Daumens zu optimieren, weiters kann die Befestigung der Spannzange in der Druckkappe durch eine Schnellkupplung an Stelle der Gewindeverschraubung erfolgen, um den Wechsel von Spannzangen zu erleichtern, es kann auch das Distanzstück 23 axial verstellbar und austauschbar ausgebildet sein, um den Längsanschlag der Werkzeuggriffe justieren zu können und es kann beispielsweise das Kopfgehäuse 1 werkzeugseitig die Spannzange übergreifen und abdecken, um eine geschlossene Bauart zu erzielen und den Austritt von Schmieröl zu erschweren. Ebenso ist es möglich, Dichtungen abzubringen, die alle Lagerstellen nach außen abdichten und schließlich ist es denkbar, Wälzlager an Stelle von Gleitlagern einzusetzen, um durch Dauerschmierung Wartungsfreiheit zu erreichen. Bezüglich des Hauptantriebes z. B. kann die Kurbelwelle mit jeder der zahlreichen bekannten Winkeltriebe in geeigneter Weise gelenkig gekoppelt werden, und es wird den Rahmen der Erfindung nicht verlassen, wenn beispielsweise die Kurbelachse ohne Zwischenlagerung direkt mit der Hauptachse 32 kardanisch gekoppelt wird oder wenn für den Antrieb der Kurbelwelle ab dem Schlitzlager 42 eine biegsame Welle bis zum Handstückende oder bis zum Antriebsmotor sich erstreckt.

**Patentansprüche**

1. Feilwerkzeug mit in einem Winkelkopf (1) axial unverschiebbar gelagertem, drehbeweglich oszillierendem Werkzeughalter (2) und einer in diesem verschiebbar gelagerten, durch eine Druckfeder (19) in Schließstellung gehaltenen und mittels eines Druckknopfes durch Verschieben zu lösender Kegelspannzange (10) für die drehfeste Aufnahme der Handhaben (21) zahnärztlicher Wurzelkanalfeilen und mit Antrieb des Werkzeughalters (2) mittels Exzenterzapfens (6) einer Kurbelwelle (5), dadurch gekennzeichnet, daß der Druckknopf als Verschlußkappe (16) des Winkelkopfes (1) ausgebildet ist, die in Betriebsstellung bei eingespanntem Werkzeug über das zugeordnete Ende des Winkelkopfgehäuses (1, 27) vorsteht und dieses gegebenenfalls umkreist und daß weiters die Spannzange (10) länger als der Werkzeughalter (2) ist, daß der Werkzeughalter (2) an seinem Außenmantel in der Ebene des Kopfschaftes eine radiale, gegen die Längsbohrung (9) des Werkzeughalters (2) geschlossene Bohrung (7) aufweist, in welche der exzentrische Triebzapfen (6) der Kurbelwelle (5) drehbar gelagert eingreift, und daß die Kurbelwelle geführt ist.

2. Feilwerkzeug nach Anspruch 1, dadurch gekennzeichnet, daß die in die Ausnehmung (7) des Werkzeughalters eingreifende Kurbelwelle (5) an ihrem Antriebsende kardanisch gelenkig (36-39) gelagert ist.

3. Feilwerkzeug nach den Ansprüchen 1 oder 2, dadurch gekennzeichnet, daß die Kurbelwelle nahe an ihrem Exzenterteil (40) in einem Schlitz (41) des Kopfschaftes (8, 42) drehbeweglich geführt ist, der in gleicher Ebene mit der Achse der Werkzeughalters (2) und des Kopfschaftes (8) liegt und eine Pendelbewegung der Kurbelachse (5) in dieser Ebene um den doppelten Betrag seines Exzenterradius zuläßt.

4. Feilwerkzeug nach Anspruch 2, dadurch gekennzeichnet, daß die kardanisch gelenkige Lagerung des Antriebsendes der Kurbelwelle (5) durch eine die Kurbelwelle fortsetzende Welle gebildet wird.

5. Feilwerkzeug nach den Ansprüchen 1 bis 4, dadurch gekennzeichnet, daß die Kurbelwelle (5) mit ihrem kardanisch gelenkigen Antriebsende im Wellenende (32) eines winkelig an den Kopfschaft anschließenden Griffteiles (31) des Feilwerkzeuges gelagert ist.

6. Feilwerkzeug nach den Ansprüchen 1 bis 5, dadurch gekennzeichnet, daß die Lager (3, 4, 35) der drehbeweglichen Teile Wälzlager sind.

7. Feilwerkzeug nach den Ansprüchen 1 bis 6, dadurch gekennzeichnet, daß die Lager (3, 4) der drehbeweglichen Teile, insbesondere des Werkzeughalters, durch an sich bekannte Dichtmittel wie Ringdichtungen, Dichtscheiben, Lippendichtungen, Labyrinthdichtungen od. dgl. nach außen flüssigkeitsdicht abgeschlossen sind.

8. Feilwerkzeug nach den Ansprüchen 1 bis 7, dadurch gekennzeichnet, daß die Spannzange (10) des Werkzeughalters (2) nach Länge und Innendurchmesser für die Aufnahme der Handhaben (21) von Wurzelkanalfeilen (22) bemessen ist, die für den Handgebrauch im Handel sind.

## Claims

1. A filing tool comprising : a tool holder (2) which is secured in an angle lead (1) against moving axially and which performs oscillating rotations ; and a conical chuck (10) which is movably mounted in the holder (2) and is operative to receive non-rotatingly the hand-pieces (21) of dental root canal files, is retained in the closed position by a compression spring (19) and is releasable by means of a press button by displacement, the tool holder (2) being driven by way of an eccentric pin (6) of a crank shaft (5), characterised in that the press button is in the form of a closure cap (16) of the angle head (1) and in the operative position with the tool chucked projects beyond the associated end of the angle head casing (1, 27) and possibly therearound ; the chuck (10) is longer than the tool holder (2) ; the tool holder (2) is formed on its outside envelope in the plane of the head stem with a radial bore (7) which is closed off from the longitudinal bore (9) in the tool holder (2) and in which the eccentric pin (6) of the crankshaft is mounted rotatably, and the crankshaft is guided.

2. A filing tool according to claim 1, characterised in that the crankshaft engaging in the tool holder recess (7) is universally mounted (36-39) at its drive end.

3. A filing tool according to claim 1 or 2, characterised in that near its eccentric part (40) the crankshaft is guided rotatably in a slot (41) in the head stem (8, 42), the latter slot being in the same plane as the axis of the tool holder (2) and head stem (8) and permitting the crankshaft (5) to rock in such plane by an amount corresponding to twice its eccentric radius.

4. A filing tool according to claim 2, characterised in that the universal mounting of the crankshaft drive end is embodied by a shaft which continues the crankshaft.

5. A filing tool according to claims 1 to 4, characterised in that at its universally mounted drive end the crankshaft (5) is mounted in the shaft end (32) of a grip part (31) of the filing tool, the head stem merging into such grip part.

6. A filing tool according to claims 1 to 5, characterised in that the bearings (3, 4, 35) of the rotating parts are rolling bearings.

7. A filing tool according to claims 1 to 6, characterised in that the bearings (3, 4) of the rotating parts, more particularly the tool holder, are sealed by known sealing means such as ring seals, sealing discs, lipped seals, labyrinth seals or the like so as to be externally liquid-tight.

8. A filing tool according to claims 1 to 7, characterised in that the workpiece holder chuck (10) is of a length and internal diameter such as to be adapted to receive the handpieces (21) of commercially available manual root canal files (22).

## Revendications

1. Outil à forer, comportant : un support d'outil (2) oscillant angulairement, monté sans possibilité de déplacement axial dans une tête de contrangle (1) ; une pince de serrage conique (10) qui est montée de manière à pouvoir coulisser dans ce support d'outil, est maintenue fermée par un ressort de compression (19) et peut être libérée au moyen d'un bouton-poussoir, par un déplacement en translation, cette pince conique étant destinée à recevoir la queue d'entraînement (21) de forets pour canaux radiculaires ; et des moyens d'entraînement pour entraîner le support d'outil (2) au moyen d'un tourillon excentrique (6) d'un arbre en forme de manivelle (5), caractérisé en ce que le bouton-poussoir est réalisé sous la forme d'une coiffe (16) de fermeture de la tête coudée (1), cette tête débordant au-delà de l'extrémité de l'enveloppe (1, 27) de la tête coudée lorsque l'outil est monté et serré en position de fonctionnement, et entourant éventuellement cette enveloppe, et en ce qu'en outre la pince de serrage (10) est plus longue que le support d'outil (2), en ce que ce support d'outil (2) présente, dans sa périphérie extérieure, dans le plan de la tige de la tête, un trou (7) radial qui est fermé par rapport au trou longitudinal (9) du support d'outil (2) et dans lequel le tourillon excentrique d'entraînement (6) appartenant à l'arbre (5) en forme de manivelle s'engage en y constituant une portée de rotation, et en ce que l'arbre en forme de manivelle est guidé.

2. Outil à forer selon la revendication 1, caractérisé en ce que l'arbre (5) en forme de manivelle s'engageant dans l'évidement (7) du support d'outil a son extrémité entraînée qui est dotée d'une articulation à la Cardan (36-39).

3. Outil à forer selon la revendication 1 ou 2, caractérisé en ce qu'à proximité de sa partie excentrique (40), l'arbre en forme de manivelle est guidé, de manière autorisant la rotation, dans une fente (41) de la tige (8, 42) de la tête, cette fente se trouvant dans le même plan que l'axe du support d'outil (2) et de la tige (8) de la tête et autorisant un mouvement pendulaire de l'arbre (5) en forme de manivelle, dans ce plan, avec une amplitude double du rayon d'excentrique de cet arbre.

4. Outil à forer selon la revendication 2, caractérisé en ce que les moyens d'articulation à la Cardan de l'extrémité entraînée de l'arbre (5) en forme de manivelle comprennent un arbre prolongeant l'arbre en forme de manivelle.

5. Outil à forer selon les revendications 1 à 4, caractérisé en ce que, par son extrémité articulée à la Cardan, l'arbre (5) en forme de manivelle est monté dans l'extrémité (32) d'un arbre d'une partie (31) formant poignée de l'outil à forer, se raccordant à la tige de la tête en formant un angle par rapport à celle-ci.

6. Outil à forer selon les revendications 1 à 5, caractérisé en ce que les paliers (3, 4, 35) des parties mobiles angulairement ou en rotation sont des roulements.

7. Outil à forer selon les revendications 1 à 6, caractérisé en ce que les paliers (3, 4) des parties mobiles angulairement, notamment ceux du support d'outil, sont fermés vis-à-vis de l'extérieur, d'une manière assurant l'étanchéité aux liquides, par des moyens d'étanchéité connus en soi, tels que des joints d'étanchéité annulaires, des rondelles d'étanchéité, des joints à lèvre(s), des joints à labyrinthe, ou analogues.

8. Outil selon les revendications 1 à 7, caractérisé en ce que la pince de serrage (10) du support d'outil (2) possède une longueur et un diamètre intérieur choisis pour recevoir la queue d'entraînement (21) de forets (22) de canal radiculaire disponibles dans le commerce.

FIG.1

FIG.2

FIG.3

FIG. 4

FIG. 5

2